# EUROPEAN PATENT APPLICATION

(11) **EP 1 243 807 A2**
(43) Date of publication of application: **25.09.2002**
(21) Application number: 02075934.6
(22) Date of filing: 08.03.2002
(51) Int. Cl.: F16D 66/02

(54) **Brake wear detection device for trailer units**

(30) Priority: 22.03.2001 ES 200100834 U
(71) Applicant: Aizpun Urriza, Francisco, 01004 Vitoria (Alava) (ES)
(72) Inventor: Aizpun Urriza, Francisco, 01004 Vitoria (Alava) (ES)
(74) Representative: Elmeros, Claus

(57) **Abstract**

The present invention relates to a brake wear detection device for trailer units (2), comprising an electrical circuit (4), normally closed, that is fed from the tractor unit (1). It connects the entire series of conventional devices for detecting wear and tear in the lining of brake shoes or pads located in each of the wheels (2a-2f) of the trailer unit, and which is connected to a relay (3) that is able to induce the closure of an additional circuit (5), which is normally open, that is also connected to the same relay.

It is advantageous to equip any trailer unit hooked up to a tractor unit, such as trailers for buses, trucks, tractors, cars, caravans, and so on, with braking devices independent of the braking devices of the tractor unit, in order to limit the inertial effect of the trailer against the aforementioned tractor when the tractor unit brakes. When operated together from the tractor, both braking systems can act independently or in synch.

## Description

The present invention relates to a brake wear detection device for trailer units, comprising an electrical circuit, normally closed, that is fed from the tractor unit. It connects the entire series of conventional devices for detecting wear and tear in the lining of brake shoes or pads located in each of the wheels of the trailer unit, and which is connected to a relay that is able to induce the closure of an additional circuit, which is normally open, that is also connected to the same relay. This second circuit is capable of emitting a command pulse to activate any alarm system in the tractor unit, or in both units, when it detects that the first circuit has opened. The opening of this circuit occurs when critical wear is detected in the lining of the brake shoes or pads in one or more of the wheels of the trailer unit, or when any other anomaly is detected in the braking system.

It is advantageous to equip any trailer unit hooked up to a tractor unit, such as trailers for buses, trucks, tractors, cars, caravans, and so on, with braking devices independent of the braking devices of the tractor unit, in order to limit the inertial effect of the trailer against the aforementioned tractor when the tractor unit brakes. When operated together from the tractor, both braking systems can act independently or in synch.

It is also evidently advantageous to have a reliable, permanent system of control over the status and proper working of the aforementioned braking systems in the trailer unit so that the driver of the tractor unit is immediately aware of any anomalies that arise either in the making up of the elements of the braking systems or in their operability.

The latter idea, therefore, is the basis for the principle of this invention. Indeed, the goal is to provide the driver of any vehicle pulling a trailer unit, such as those mentioned above or others, with reliable control and warning or alarm over the status and performance of the braking systems in the wheels of the trailer unit, accessible in the cab of the tractor or in both units.

This means of detection, warning and alarm consists of an electrical circuit that connects serially all of the braking devices in each and every one of the wheels of the trailer, and which, when closed, provides a quantifiable status of operability.

When this circuit opens for any reason, such as when excessive wear is detected in the lining of the brake shoes or pads in one of the wheels, the operability status varies. This variation is quantified and used as a command pulse to activate whichever visual or audio warning devices or elements placed in the cab of the tractor unit or in any other position. This warning can be a blinking or steady light, an audible alarm, or any other device that alerts the driver immediately of anomalies in the braking system of the trailer unit.

An additional quality of the detection device being presented is that it provides accessible, universal means of connection between the elements of the detection device located in the tractor unit and the device elements located in the trailer unit. This way, operations such as substituting the trailer unit, or simply hooking up and unhooking the two units, can be carried out in a fast and easy way.

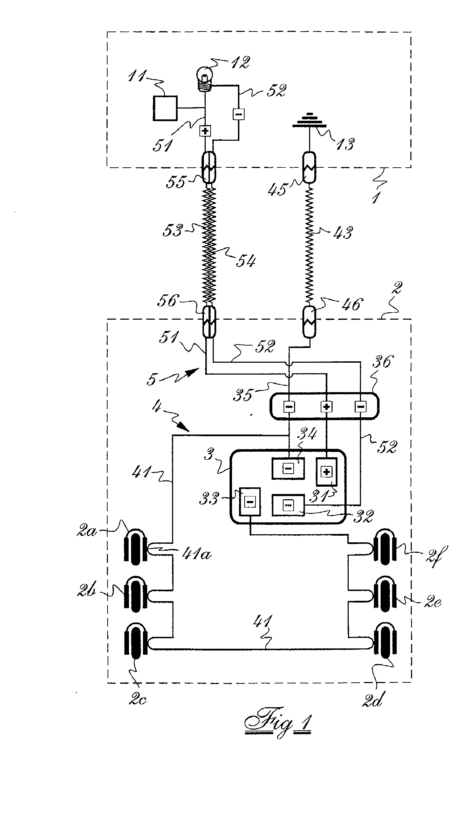

This and other qualities and advantages of the Model are easily appreciated by experts in this matter when reading the detailed description that follows. It is accompanied by drawings in which:
The only figure, Fig. 1, provides a schematic view of the circuit that constitutes the detection device according to the invention.

In this figure, number **1** represents, schematically, a tractor unit, corresponding to any kind of vehicle, such as a bus, a truck or rig, a car, a camper, and so on. Number **2** represents a trailer unit. They are connected conventionally in both the traction and in relation to the services provided by the tractor unit to the trailer unit, such as power supplying to the external signalling system, internal lighting, or the hydraulic circuit for the trailer's braking system or, in the absence of this, the means of connection for control of independent braking systems.

A coiled, dual-polarity conductor, **53, 54,** with quick hook-up terminals, **55, 56,** connects both units to absorb any tension between the tractor and trailer when in motion. Its arrangement, like that of a single-pole conductor, **43,** which is also coiled, with quick hook-up terminals, **45** and **46,** is defined below.

A conveyance line, **51,** firmly connected to the power source, **11,** of the tractor unit, **1,** through the coiled conductor, **53,** and the connection module, **36,** on the trailer unit, **2,** selectively provides a continuous 24-volt current from the previously mentioned power source, **11,** to the positive terminal, **31,** of a relay, **3,** conveniently located on the trailer unit, **2.** And another conveyance line, **35,** through the coiled conductor, **43,** and the connection module, **36,** connects the relay, **3,** through its terminal, **34,** with the union socket, **13,** on the tractor unit, **1.** This provides negative polarity to the relay, **3,** with which to form a bipolar circuit.

A circuit, **4,** made up of a conductor, **41,** connected at one end to the conductor, **35,** and, therefore, to the terminal, **34,** of the relay, **3,** and which, thereby, receives a negative polarity, connects, in line, each and every one of the brake system anomaly detection devices in the wheels, **2a, 2b, 2c, 2d, 2e,** and **2f,** and closes on the other end on the terminal, **33,** of the relay, **3.**

A bipolar circuit, **5,** consisting of a power conductor, **51,** connected to the positive terminal, **31,** of the relay, **3,** on one end, and to the power source, **11,** and to the positive pole of an alarm device, such as a light, **12,** on the other end, and of a conductor, **52,** from the negative terminal, **32,** of the relay, **3,** that, through the connection module, **36,** and the coiled conductor, **54,** connects to the negative pole of the alarm device, **12,** is suitable to provide negative polarity selectively to the warning and alarm device, the light, **12,** causing the circuit, **5,** to close and, consequently, providing power to the alarm device, **12.**

With this layout, when positive energy from the power source, **11,** is provided to the terminal, **31,** of the relay, **3,** (an action that may by synchronised and maintained with the starter contact of the tractor unit) the relay, **3,** maintains the terminal, **32,** closed, so that the circuit, **5,** is open. Thus, the alarm device, **12,** is without power and it remains that way as long as the relay, **3,** detects that the circuit, **4,** is properly closed.

Then, when any of the conventional devices (located in each of the wheels of the trailer) for detecting wear in the lining of the brake shoes or pads, or any other type of malfunction in the braking system, detects, for example, excessive wear in the lining of the brake shoes or pads in the braking system, **2a,** the device induces the opening of the associated circuit, **4,** in the connection position between both, **41a.** When this opening is detected by the relay, **3,** it causes the relay to open its terminal, **32,** providing negative polarity energy to the conductor, **52.** The conductor then delivers the energy to the negative pole of the alarm device, **12,** closing the circuit, **5,** and powering up the light, **12,** if there is one, or emitting a pulse capable of powering any other alarm device, thereby alerting the tractor driver of a malfunction in the trailer unit's braking system.

Certain changes, modification, alterations, substitutions, or variations may be added to the method described, since the detail above is a mere illustration and is by no means binding. All of these changes, and any others that may occur to people skilled in the art, will be included in this invention, as long as the spirit and the broadest range of the following claims are not exceeded.

## Claims

1. A brake wear detection device for trailer units, suitable for emitting a command pulse with which to activate a warning or alarm device placed in the tractor unit (or in a variety of positions, accessible to the tractor driver) upon detection of improper or excessive wear in the lining of the brake shoes or pads in the wheels of the trailer unit, or of any other anomaly in the operational status of the same, **characterised in that** the device includes:
a single-pole circuit, normally closed, conveniently located in the trailer unit, suitable for connecting, in-line, each and every one of the conventional devices for detecting anomalies in the make-up or performance of the elements in the braking system in the wheels of the tractor unit, which can open when any of these conventional devices detects any malfunction in the brakes, connected to;
a relay, connected to the above-mentioned circuit, capable of evaluating the operational status of the circuit and inducing the closure of a second circuit or bipolar alarm circuit, normally open, connected to it, upon detecting that the first circuit has opened due to an anomaly in the braking system. This relay is powered by a positive polarity, continuous 24-volt current from the power source of the tractor unit and negative polarity through a connection with the union socket of the tractor unit;
a bipolar circuit, normally open, connected to the above-mentioned relay and an alarm device in the tractor unit (or in any other position, accessible to the driver), as well as in the trailer unit, capable of being closed by the relay upon detecting that the single-pole circuit is open due to an anomaly in the braking system, and providing power with that closure to the alarm device in the tractor unit, or creating and emitting a pulse with which to power any other alarm device;
and the appropriate means by which to connect the parts of the device on the tractor unit with those located on the trailer unit, in the form of coiled conductors capable of absorbing tensions produced between the two units while in motion, both ends of which being equipped with quick hook-up terminals.
